Europäisches Patentamt

**European Patent Office**

Office européen des brevets

(11) Numéro de publication : **0 300 871 B1**

(12) **FASCICULE DE BREVET EUROPEEN**

(45) Date de publication du fascicule du brevet :
**02.01.92 Bulletin 92/01**

(21) Numéro de dépôt : **88401769.0**

(22) Date de dépôt : **06.07.88**

(51) Int. Cl.⁵ : **A21C 1/14**

(54) **Pétrin pour matériau pâteux, notamment pour pâte à pain.**

(30) Priorité : **08.07.87 FR 8709710**

(43) Date de publication de la demande :
**25.01.89 Bulletin 89/04**

(45) Mention de la délivrance du brevet :
**02.01.92 Bulletin 92/01**

(84) Etats contractants désignés :
**AT BE DE ES FR GB IT NL SE**

(56) Documents cités :
**BE-A- 424 936**
**FR-A- 419 640**
**US-A- 2 137 558**

(73) Titulaire : **DITO-SAMA**
**39 rue de Beauze**
**F-23200 Aubusson Creuse (FR)**
Titulaire : **LOISELET, Michel Résidence Le**
**Chantilly**
**7, avenue du Général de Gaulle - App. 47**
**F-30100 Ales (Gard) (FR)**

(72) Inventeur : **Loiselet,Michel**
**7 avenue du Gal.de Gaulle**
**Residence "Le Chantilly", 30100 Ales (FR)**
Inventeur : **Musseau,Joel**
**c/o Dito Sama**
**F-23200 Aubusson (FR)**

(74) Mandataire : **Bressand, Georges et al**
**c/o CABINET LAVOIX 2 Place d'Estienne**
**d'Orves**
**F-75441 Paris Cédex 09 (FR)**

## Description

La présente invention concerne un pétrin pour matériau pateux, notamment pour pâte à pain.

Depuis le début du siècle, les pénibles pétrissages manuels ont progressivement disparus en raison de la mécanisation de plus en plus poussée des pétrins.

En effet, il existe dans l'état de la technique un certain nombre de pétrins mécaniques, du type comportant un bâti portant une cuve de travail dans laquelle plonge un outil de travail de la pâte, cet outil de travail étant par exemple fixé sur une tête de support d'outil qui est elle-même portée par le bâti.

Il existe principalement deux types de pétrins, l'un dit à cuve tournante, dans lequel la cuve est entraînée en rotation par rapport à l'outil de travail qui est fixe et l'autre dit à outil tournant, dans lequel l'outil tourne par rapport à la cuve qui est fixe.

Cependant, quel que soit le type de pétrin, il subsiste un problème qui réside dans la vidange de la cuve du pétrin. En effet, il y a actuellement deux types de solutions pour vidanger une cuve de pétrin. Ces solutions consistent d'une part dans la vidange manuelle, c'est à dire que l'utilisateur extrait manuellement la pâte de la cuve du pétrin, et d'autre part, dans la vidange mécanique, qui est réalisée par l'intermédiaire de moyens de retournement de la cuve, comme dans le document US-A-2137558 qui décrit un appareil comportant les caractéristiques du préambule de la revendication 1.

La solution manuelle est d'autant plus pénible que la quantité de pâte est importante.

Par ailleurs, les moyens de retournement qui se présentent par exemple sous la forme de bras élévateurs, sont relativement encombrants, d'un prix de revient élevé, d'une utilisation peu aisée et nécessitent donc des investissements très importants en matériel et en locaux.

On connait d'après le document BE-A 424936 des perfectionnements aux machines dites "rouleuses". Ces machines comportent deux corps entraînés en rotation en sens inverse pour conformer des pâtons. Un organe d'éjection de ces pâtons est disposé entre les corps et se présente sous la forme d'un escargot de sortie.

Les problèmes posés dans ce type de machines sont complètement différents de ceux posés dans un pétrin, en particulier pour la vidange de la pâte.

Le but de l'invention est de résoudre les problèmes évoqués précédemment à propos de la vidange de la cuve d'un pétrin, en proposant un pétrin équipé de moyens de vidange, qui soient simples, fiables, d'un prix de revient peu élevé et qui permettent de vidanger relativement facilement et rapidement cette cuve, tout en travaillant la pâte et en la préparant pour des traitements ultérieurs.

A cet effet, l'invention a pour objet un pétrin pour matériau pateux, notamment pour pâte à pain, du type comportant une cuve ayant une partie supérieure ouverte et des moyens de vidange de ladite cuve, caractérisé en ce que lesdits moyens de vidange comprennent au moins un déflecteur de pâte dont une partie formant racloir s'étend, en position active, dans la cuve, adapté pour coopérer avec la paroi intérieure de la cuve afin de vidanger la cuve par déplacement relatif de la cuve, de la pâte et du déflecteur, en formant à partir de la masse de pâte contenue dans la cuve, un boudin de pâte, ledit déflecteur comprenant une première portion d'extrémité adaptée pour prélever de la pâte dans le fond de la cuve, une portion intermédiaire adaptée pour remonter la pâte prélevée vers la partie supérieure de la cuve, et une seconde portion d'extrémité adaptée pour éjecter la pâte vers l'extérieur de la cuve.

L'invention sera mieux comprise à l'aide de la description qui va suivre, donnée uniquement à titre d'exemple et faite en se référant aux dessins annexés, sur lesquels :

— la Fig. 1 représente une vue de côté en perspective d'un pétrin selon l'invention, les différents organes entrant dans la constitution de ce pétrin étant représentés en position active ;

— la Fig. 2 représente une vue de côté en perspective du pétrin selon l'invention, la tête de support de l'outil de travail étant représentée en position relevée et le déflecteur en position escamotée ;

— la Fig. 3 représente une vue de dessus du pétrin représenté sur la Fig. 1, l'écran de sécurité n'étant pas représenté ;

— la Fig. 4 représente une vue en perspective de côté d'un déflecteur entrant dans la constitution d'un pétrin selon l'invention ;

— la Fig. 5 représente une autre vue en perspective du déflecteur représenté sur la Fig. 4 ;

— la Fig. 6 représente une vue en coupe suivant la ligne VI-VI de la Fig. 5 ;

— la Fig. 7 représente une vue en coupe suivant la ligne VII-VII de la Fig. 5 ;

— la Fig. 8 représente une vue de côté en perspective avec des portions arrachées, d'un pétrin selon l'invention ;

— la Fig. 9 représente une vue de dessus d'un déflecteur entrant dans la constitution d'un pétrin selon l'invention ;

— la Fig. 10 représente une vue de face d'un pétrin selon l'invention, l'écran de sécurité étant représenté en position relevée et le déflecteur en position active ;

— la Fig. 11 représente une vue analogue à la Fig. 10, le déflecteur étant représenté en position escamotée ;

— la Fig. 12 représente une vue en perspective d'un second mode de réalisation d'un déflecteur entrant dans la constitution d'un pétrin selon l'invention ;

— les Fig. 13 et 14 représentent des vues en perspective d'un autre mode de réalisation d'un déflecteur et d'un pétrin selon l'invention ; et

— la Fig. 15 représente une vue ce détail du déflecteur entrant dans la constitution du pétrin représenté sur les Fig. 13 et 14.

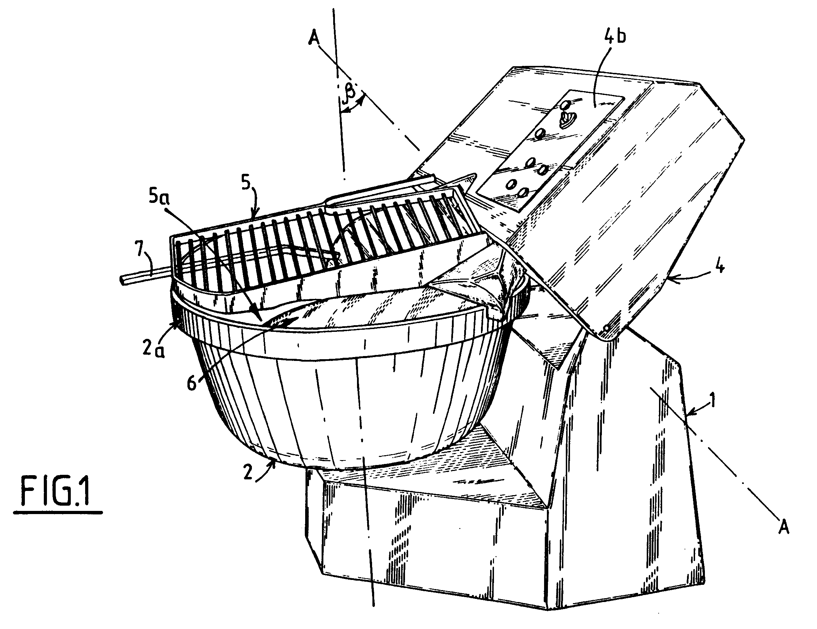

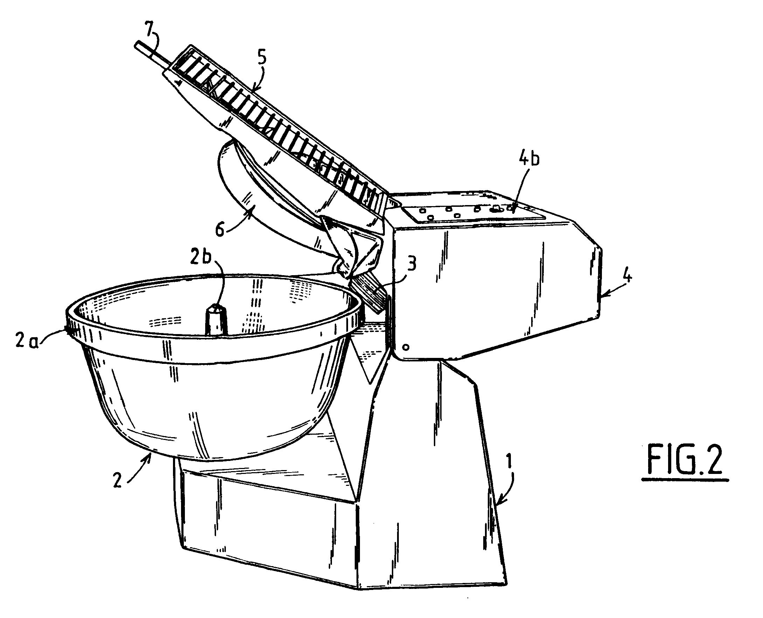

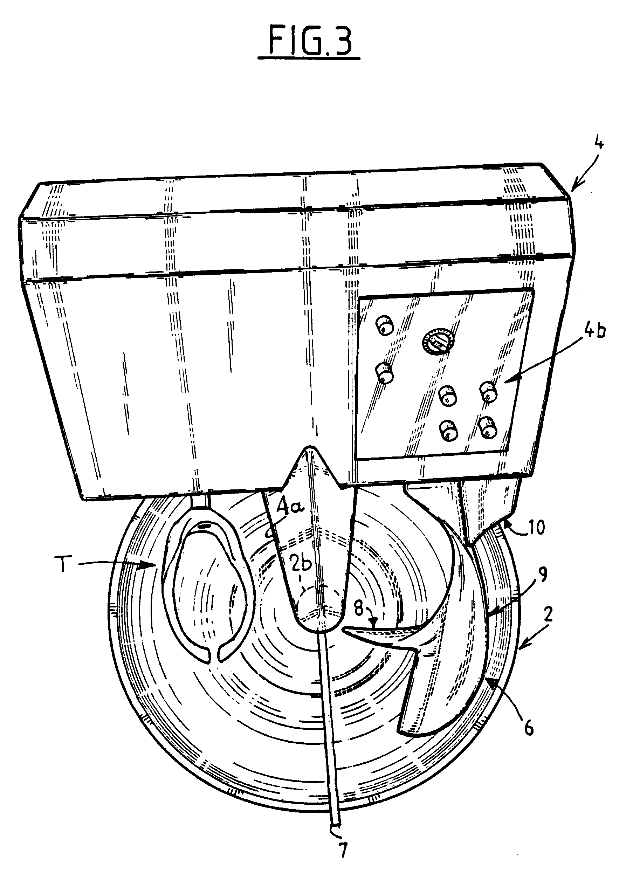

Ainsi qu'on peut le voir sur les Fig. 1, 2 et 3, un pétrin selon l'invention comporte un bâti 1 sur lequel est disposée une cuve 2, entraînée en rotation par exemple entre 4 et 30 trs/mn, par l'intermédiaire de tout moyen approprié comme par exemple un galet conique 3 (Fig. 2) relié à un moteur électrique (non représenté) et coopérant avec une piste de roulement 2a prévue dans la partie supérieure de la cuve 2. Une tête de support d'outil de travail 4 est également montée articulée sur le bâti 1 et est déplaçable entre une première position représenté sur la Fig. 1, qui sera appelée ci-après position abaissée ou active et une position relevée illustrée sur la Fig. 2, et permettant à l'utilisateur d'avoir accès à l'intérieur de la cuve par exemple pour la nettoyer. L'outil de travail T (Fig. 3) étant de type connu en soi, on ne le décrira pas plus en détail. On notera toutefois qu'il est entraîné en rotation sur lui-même de manière connue en soi, pour assurer le travail de la pâte.

Un écran de sécurité 5 est également monté articulé sur la tête de support de l'outil 4 et est déplaçable entre une position de fermeture de la cuve 2 et une position d'ouverture permettant également à l'utilisateur d'avoir accès à l'intérieur de la cuve.

Bien entendu, la tête de support de l'outil de travail, le bâti et l'écran de sécurité sont équipés de tout moyen approprié permettant d'arrêter la rotation de l'outil de travail et/ou de la cuve, lorsque l'utilisateur déplace l'un de ces éléments.

Un déflecteur de pâte 6 dont une partie s'étend, en position active, dans la cuve, est par exemple fixé sur la tête de support de l'outil 4 et est adapté pour vidanger la cuve par déplacement relatif de celle-ci, de la pâte et du déflecteur comme cela sera décrit plus en détail par la suite.

Une poignée 7 fixée sur une partie en saillie 4a de la tête de support de l'outil 4 est également prévue pour permettre à l'utilisateur de déplacer celle-ci entre ses deux positions. La fonction de la partie en saillie 4a sera décrite plus en détail par la suite.

Il est également à noter que l'écran de sécurité 5 comporte un dégagement 5a permettant le passage du déflecteur pour sa fixation sur la tête de support de l'outil de travail et à l'utilisateur d'avoir accès à l'intérieur de la cuve entre le déflecteur et cette cuve, par exemple pendant le pétrissage de la pâte, afin qu'il puisse toucher cette pâte.

Un tableau de commande 4b peut également être prévu sur la tête de support de l'outil de travail 4.

Ainsi que cela est représenté sur les Fig. 3, 4 et 5, le déflecteur 6, fixé sur tête de support de l'outil, comprend une première portion d'extrémité 8 adaptée pour prélever de la pâte dans le fond de la cuve 2, une portion intermédiaire 9 adaptée pour remonter la pâte prélevée dans le fond de la cuve vers la partie supérieure de celle-ci, et une seconde portion d'extrémité 10 adaptée pour éjecter la pâte vers l'extérieur de la cuve.

La partie en saillie 4a (Fig. 3) de la tête de support de l'outil de travail s'étend à partir de celle-ci en direction de l'axe de rotation de la cuve 2 et coopére avec une partie 2b en saillie au centre de celle-ci pour assurer un bon guidage en rotation de la cuve.

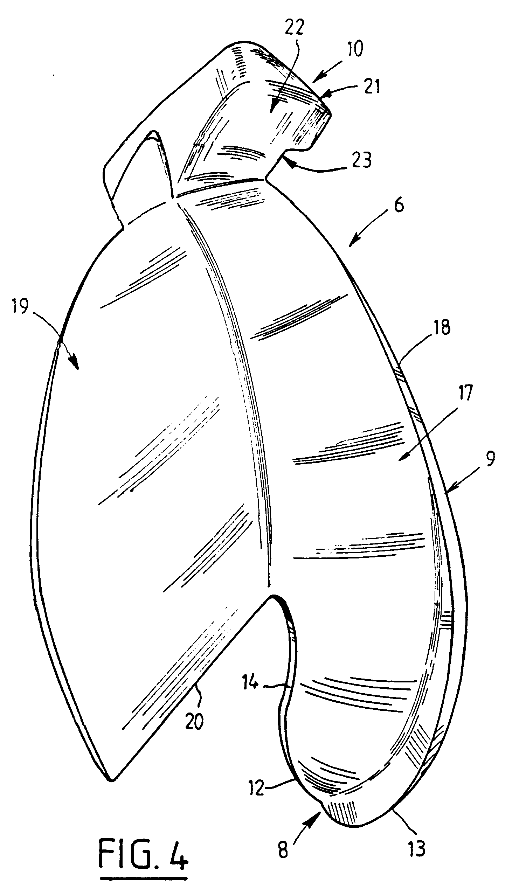

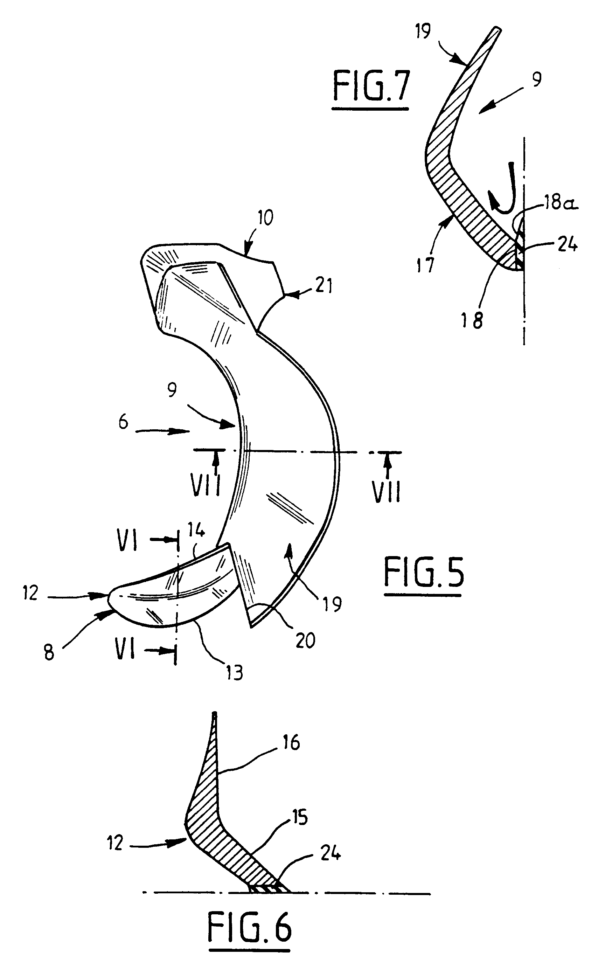

Comme on peut le voir plus particulièrement sur les Fig. 4 et 5, le déflecteur 6 et plus particulièrement la première portion d'extrémité 8 de celui-ci ; comporte une lèvre 12 formant racloir adaptée pour prélever de la pâte dans le fond de la cuve et la guider vers la portion intermédiaire 9 du déflecteur.

Cette lèvre 12 présente un premier bord 13 ayant une forme à peu près complémentaire à celle du fond de la cuve et un deuxième bord 14 adapté pour séparer au moins partiellement la pâte à prélever dans le fond de la cuve, du reste de celle-ci.

Comme cela est représenté sur la Fig. 6, la face avant de cette lèvre 12 présente avantageusement une concavité transversalement à la direction de déplacement de la pâte dans le fond de la cuve. Plus particulièrement, cette lèvre 12 comprend une première partie 15 s'étendant, en position active du déflecteur, à peu près à 45° par rapport au fond de la cuve et une seconde partie 16 s'étendant au-dessus de la première à peu près à 90° par rapport au fond de la cuve, en position active de déflecteur.

Il est également à noter que cette lèvre 12 s'étend, en position active du déflecteur, entre la partie centrale du fond de la cuve et la périphérie de celui-ci et qu'elle présente une section décroissante en direction de l'axe de la cuve.

La portion intermédiaire 9 du déflecteur se présente quant à elle sous la forme d'une portion de canal de guidage de la pâte, inclinée, en position active du déflecteur, par rapport a l'axe de la cuve et adaptée pour coopérer avec le bord latéral de celle-ci pour constituer un canal de remontée de pâte s'étendant à partir de la première portion d'extrémité 8 du déflecteur entre le fond de la cuve 2 et la partie supérieure de celle-ci.

Comme on peut le voir plus particulièrement sur la Fig. 4, ce canal de remontée de pâte présente une section décroissante en direction de la partie supérieure de la cuve. Comme on le verra par la suite, la direction générale du canal de remontée de pâte fait avec une droite parallèle à l'axe de la cuve 2 un angle compris entre 30 et 55° et avantageusement égal à 45°.

Cette portion intermédiaire 9 du déflecteur 6 comprend une lèvre 17 (Fig. 4) formant racloir, de guidage et de remontée de la pâte, reliée de manière continue à la lèvre 12 de la première portion d'extrémité 8 de celui-ci. Cette lèvre 17 comporte un bord 18 présentant une forme à peu près complémentaire à celle du bord latéral de la cuve et une aile 19 de guidage de la pâte. La lèvre 17 forme avec le bord latéral de la cuve, (en traits interrompus sur la Fig. 7), un angle aigu en position active du déflecteur 6, de manière à assurer par déplacement relatif avec le bord de la cuve un boudinage et la remontée de la pâte.

Comme on peut le voir plus clairement sur la Fig. 7, cette lèvre 17 et l'aile 19 de la portion intermédiaire 9 du déflecteur se présentent au moins partiellement, en section, sous la forme générale d'un V dont les extrémités des branches, en position active du déflecteur, sont en regard du bord latéral de la cuve de manière à définir avec celui-ci le canal de remontée de pâte.

Si l'on revient aux Fig. 4 et 5, on peut constater que l'aile 19 de la portion intermédiaire 9 du déflecteur 6 comporte un bord effilé 20, relié au second bord 14 de la lèvre 12 de la première portion d'extrémité du déflecteur, et adapté pour séparer la partie de pâte entrant dans la portion intermédiaire du déflecteur, du reste de celle-ci.

Le déflecteur se présente donc sous la forme d'une lame formant racloir adaptée pour coopérer avec la paroi intérieure de la cuve pour prélever et remonter la pâte.

La lèvre 12 de la première portion d'extrémité 8 du déflecteur est formée par une première portion de surface de la lame formant racloir, cette surface s'étendant entre la partie centrale du fond de la cuve et la périphérie de celui-ci.

La lèvre 17 de la portion intermédiaire 9 du déflecteur est constituée par une seconde portion de surface de la lame formant racloir, cette portion de surface s'étendant à partir de la première portion de surface de celle-ci constituant la première portion d'extrémité du déflecteur, le long du bord latéral de la cuve entre le fond et la partie supérieure de celle-ci pour remonter la pâte.

Il est à noter que ces première et seconde portions de surface de la lame formant racloir, délimitent une surface de guidage et de remontée incurvée et continue afin de former un parcours régulier pour la pâte lors de son prélèvement et de sa remontée.

Il est également à noter en regard de la Fig. 7, que le bord 18 de la portion intermédiaire du déflecteur, de forme complémentaire à celle du bord latéral de la cuve, présente un rebord incliné 18a de guidage de la pâte, ce rebord facilitant le boudinage de la pâte dans le canal de remontée et empêchant celle-ci de passer sous le déflecteur.

Si l'on revient à la Fig. 4, on constate que la seconde portion d'extrémité 10 du déflecteur comprend un déviateur de pâte 21 dont une extrémité est reliée à la portion intermédiaire 9 du déflecteur et dont l'autre extrémité débouche à l'extérieur de la cuve. Ce déviateur comprend une portion présentant un canal de guidage incurvé 22 dont une extrémité est dans le prolongement du canal de guidage et de remontée de pâte et l'autre débouche vers l'extérieur de la cuve. Cette portion comporte également un logement 23 de réception du rebord supérieur de la cuve lorsque le déflecteur est en position active.

Il est également à noter comme on peut le voir plus particulièrement sur les Fig. 6 et 7 qu'une bande de matériau de frottement 24 est fixée sur les bords du déflecteur en contact, en position active de celui-ci, avec la cuve. Ce matériau de frottement est avantageusement constitué par une matière plastique auto-lubrifiante de type connu en soi et la bande 24 est fixée de manière amovible sur les bords du déflecteur pour pouvoir être remplacée facilement, si nécessaire. Cette bande permet également de compenser les défauts éventuels de la cuve.

Si l'on se reporte plus particulièrement à la Fig. 7, on constate que le rebord incliné 18a de guidage de la pâte de la portion intermédiaire 9 du déflecteur est en fait constitué par un rebord incliné de la bande 24 de matériau de frottement.

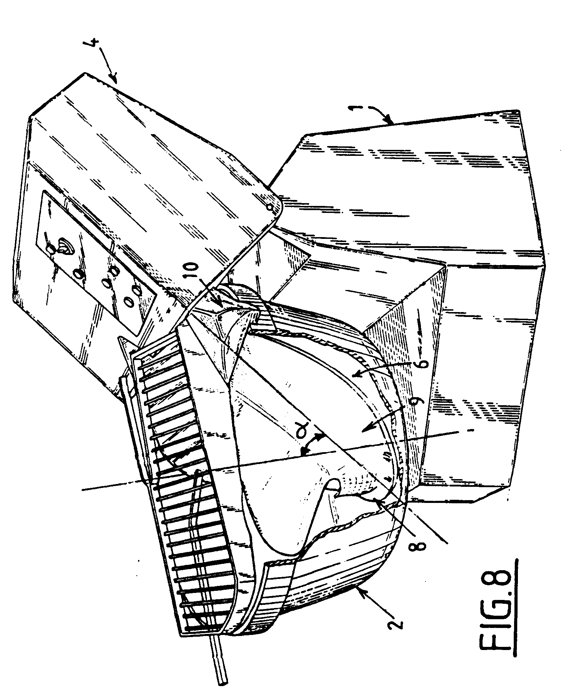

Comme on peut le voir sur les Fig. 3 et 8, la lèvre de la première portion d'extrémité 8 du déflecteur 6 s'étend entre la partie centrale de la cuve et la périphérie de celui-ci, et est donc adaptée pour prélever de la pâte dans la partie centrale de la cuve et la diriger vers la portion intermédiaire 9 de celui-ci qui s'étend le long de la paroi latérale de la cuve, entre le fond et la partie supérieure de celle-ci pour remonter la pâte vers la seconde portion d'extrémité 10 du déflecteur, qui en assure l'éjection vers l'extérieur de la cuve.

Cette éjection est possible en raison de la nature du matériau à vider qui est pateux et qui se présente lors de sa remontée, sous la forme d'un boudin de pâte se rétrécissant de plus en plus en direction de la partie supérieure de la cuve, en raison de la section décroissante du canal de remontée de pâte.

Ainsi qu'on l'a mentionné précédemment, la direction générale du canal de remontée de la pâte, illustrée par la portion de droite R sur la Fig. 8, fait avec une droite parallèle à l'axe de la cuve un angle $\alpha$ qui est avantageusement égal à 45°.

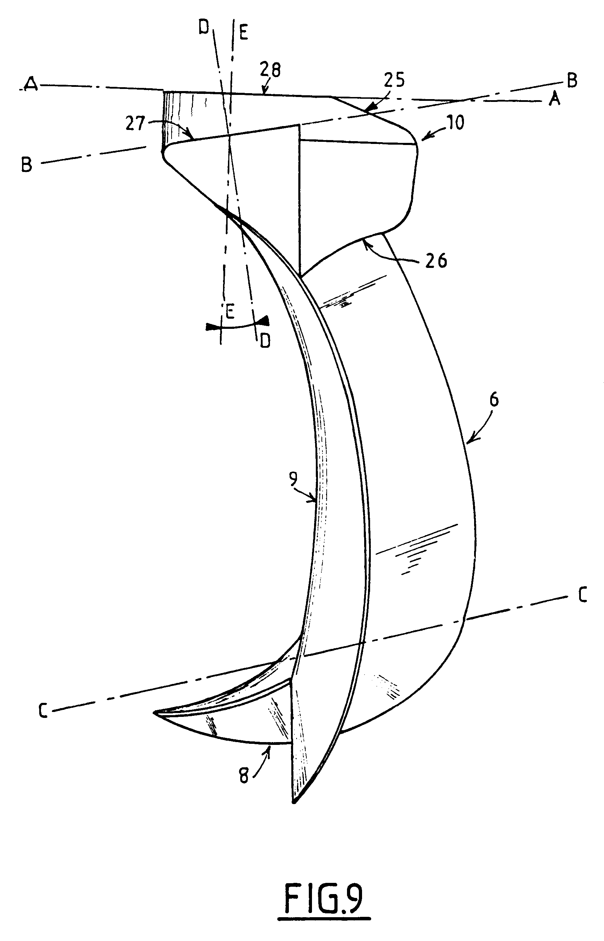

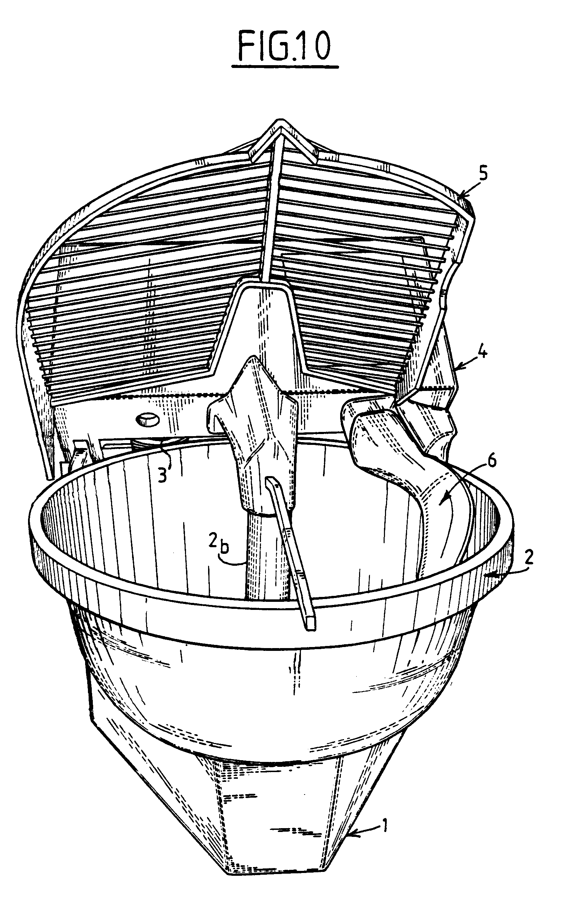

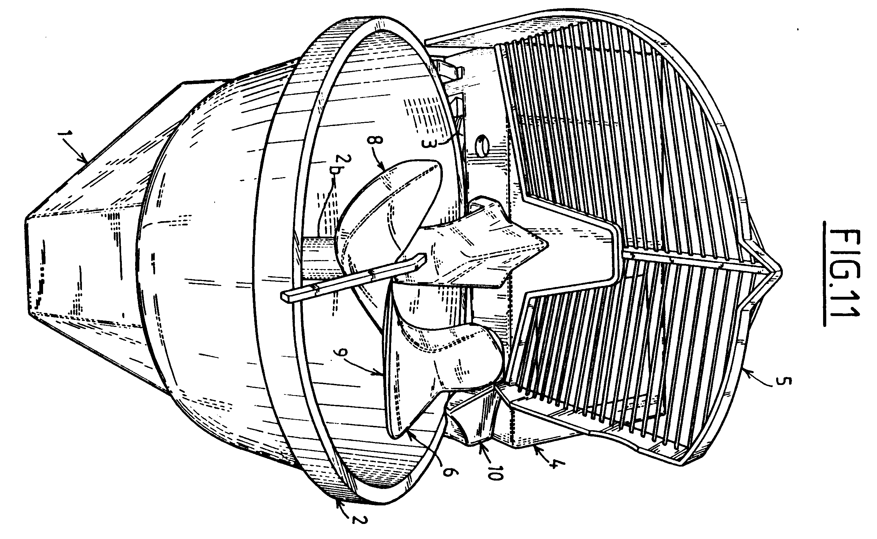

Comme on peut le voir sur les Fig. 9, 10 et 11, et ainsi qu'il a été mentionné précédemment, le déflecteur 6 peut être fixé sur la tête de support de l'outil de travail 4 et peut être monté déplaçable entre une position active comme représentée sur la Fig. 10 et une position escamotée, comme représenté sur la Fig. 11, dans laquelle le déflecteur a effectué une rotation autour de son axe de fixation sur cette tête de support de l'outil 4, pour être dégagée dans une position dans laquelle les extrémités du V formé par la lèvre et l'aile de la portion intermédiaire du déflecteur 6 sont en regard du fond de la cuve.

Comme on peut le voir plus particulièrement sur la Fig. 11, la première portion d'extrémité 8 et la portion intermédiaire 9 du déflecteur 6 sont par exemple d'une seule pièce et sont montés deplaçables par rapport à la seconde portion d'extrémité 10 de celui-ci, cette seconde portion d'extrémité étant fixée sur la tête de support de l'outil de travail 4.

En effet, comme il est représenté sur la Fig. 9, le déflecteur 6 et plus particulièrement la seconde portion d'extrémité 10 de celui-ci, comporte avantageusement un socle 25 de fixation du déflecteur sur la tâte de support de l'outil de travail. Ce socle 25 comprend une première portion de surface 26 délimitant le canal incurvé d'éjection de pâte s'étendant à partir de la portion intermédiaire 9 du déflecteur, une seconde portion de surface 27 délimitant un plan d'articulation B-B de la portion intermédiaire 9 sur ce socle 25 du déflecteur et une troisième portion de surface 28 délimitant un plan de fixation A-A du socle et donc du déflecteur sur la tête de support de l'outil de travail.

Si l'on revient à la Fig. 1, on peut voir qu'en position active du déflecteur, le plan A-A de fixation du déflecteur et plus particulièrement du socle de celui-ci sur la tête de support de l'outil de travail, fait avec un plan passant par l'axe de la cuve, un angle β d'à peu près 45°.

Par ailleurs, et toujours en position active du déflecteur, le plan d'articulation B-B (Fig. 9) entre la portion intermédiaire 9 du déflecteur et le socle 25 de celui-ci, au niveau de la seconde surface 27 du socle, est parallèle à un plan C-C passant par l'axe de la cuve et est donc vertical, en position active du déflecteur.

Afin de permettre au déflecteur et plus particulièrement la première portion d'extrémité 8 de celui-ci de dépasser la partie en saillie 2b située au centre de la cuve, lorsqu'on le déplace vers sa position escamotée, l'axe de fixation D-D (Fig. 9) de la portion intermédiaire 9 du déflecteur sur la seconde portion d'extrémité 10 de celui-ci, qui est perpendiculaire au plan d'articulation B-B et autour duquel tourne la portion intermédiaire du déflecteur, est décalé angulairement vers le bord latéral correspondant de la cuve du pétrin par rapport à un plan E-E perpendiculaire au plan A-A de fixation de la seconde portion d'extrémité du déflecteur sur la tête de support de l'outil de travail.

Avantageusement, cet axe D-D est décalé d'environ 10° par rapport au plan E-E.

Le déplacement de la portion intermédiaire du déflecteur vers la position escamotée peut se faire par tout moyen connu en soi, sous la commande par exemple d'un volant ou d'une manette d'actionnement, faisant saillie latéralement à partir de la tête de support de l'outil ou du socle de fixation du déflecteur.

Dans le mode de réalisation décrit, le déflecteur est donc monté déplaçable entre une position active et une position escamotée, par rapport à la tête de support de l'outil de travail.

Selon un second mode de réalisation, le déflecteur reste en position active à l'intérieur de la cuve du pétrin lors du travail de la pâte. Dans ce cas, le déflecteur comporte des moyens escamotables de neutralisation de l'éjection, adaptés pour dévier la pâte vers l'intérieur de la cuve.

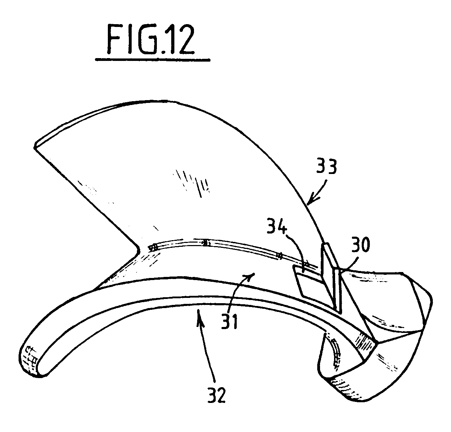

Ces moyens escamotables comprennent par exemple un volet 30 (Fig. 12) prévu dans la lèvre 31 de la portion intermédiaire 32 du déflecteur 33 et déplaçable entre une position escamotée dans la lèvre et d'obturation d'un évidement 34 de celle-ci communiquant avec la cuve et une position active de déviation de la pâte vers l'intérieur de la cuve à travers l'évidement 34. Dans ce cas, le déflecteur se comporte en outil de travail de la pâte.

Dans la description qui précède, la cuve est entraînée en rotation par rapport au déflecteur solidaire de la tête de support de l'outil de travail qui est fixe, mais il va de soi que la cuve peut également être fixe, et le déflecteur entraîné en rotation par rapport à celle-ci pour obtenir la vidange, toujours par déplacement relatif entre la cuve, la pâte et le déflecteur.

Dans tous les cas, la pâte qui est ainsi éjectée de la cuve se présente sous la forme d'un boudin à la sortie de la portion d'éjection du déflecteur. Outre le fait que ce boudin de pâte a été travaillé lors de sa remontée, le long de la portion intermédiaire du déflecteur, il est également facilement récupérable par exemple par des moyens de transport pour l'amener vers d'autres moyens de traitement.

Bien entendu, le pétrin selon l'invention peut également s'appliquer à d'autres matériaux que la pâte à pain, à savoir par exemple des mastics, des asphaltes, etc..

Avantageusement, le déflecteur est déplacé vers sa position active dans la cuve lorsque celle-ci est en rotation, ce qui facilite sa pénétration dans la pâte, par l'effet combiné des forces induites par les mouvements relatifs.

Par ailleurs, le déflecteur qui vient d'être décrit peut également être adapté à d'autres types de pétrins tels que les pétrins à axe oblique, à bras spiral, à bras alternatifs, etc..

Il va de soi que le déflecteur peut être réalisé en tout matériau approprié comme par exemple en aluminium alimentaire.

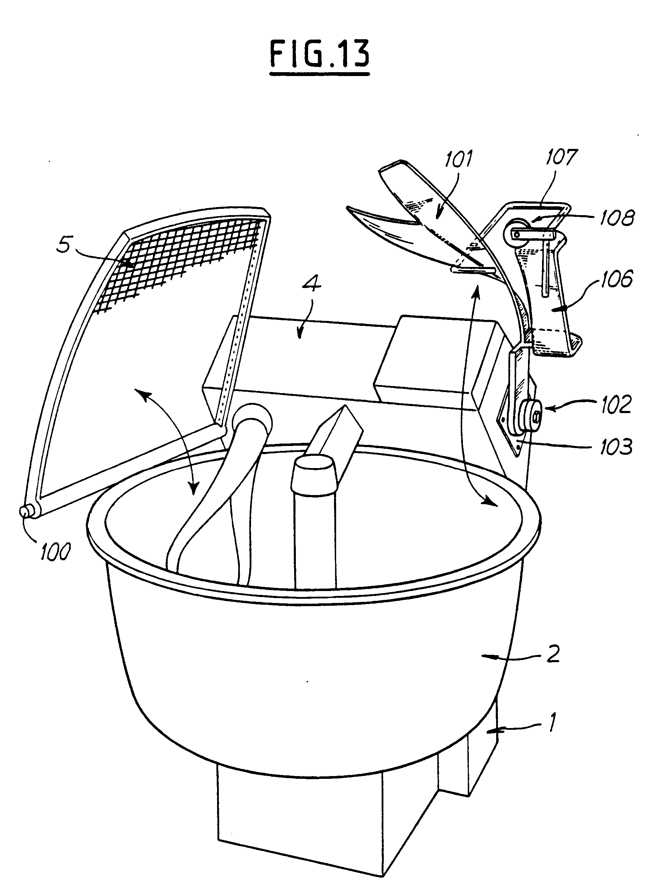

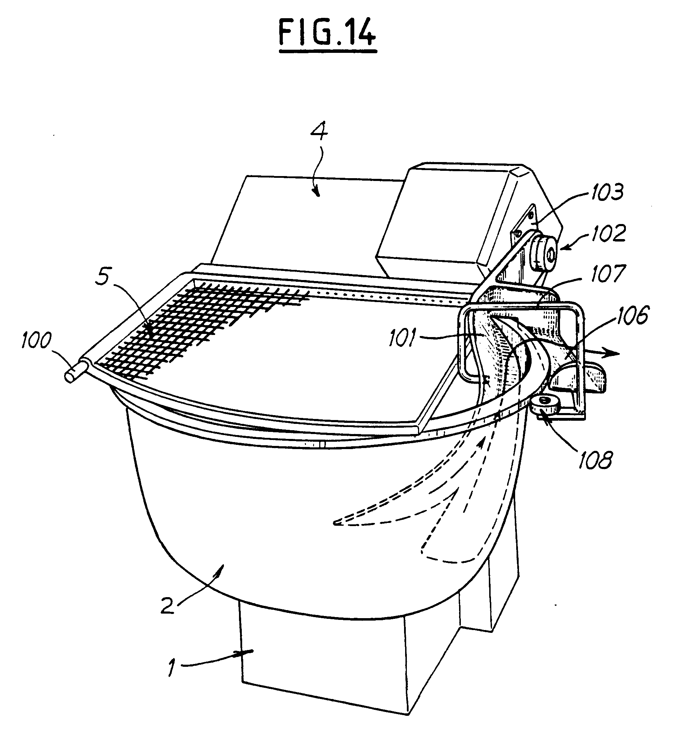

Comme on peut le voir sur les Fig. 13 et 14, qui représentent des vues en perspective d'un autre mode de réalisation d'un pétrin selon l'invention, celui-ci comporte toujours le bâti 1 sur lequel est disposée la cuve 2 entraînée en rotation par tout moyen approprié.

Le pétrin représenté sur ces figures comporte également la tête de support d'outil de travail 4 montée articulée sur le bâti 1 et un écran de sécurité 5 articulé sur la tête de support de l'outil de travail 4 entre une position d'obturation de la partie supérieure de la cuve et une position escamotée par exemple autour d'une tige d'articulation 100 s'étendant à partir de l'un des côtés de la tête de support de l'outil de travail.

Un déflecteur de pâte 101 est également monté articulé sur la tête de support d'outil de travail 4 par exemple en 102, du côté opposé à la tige d'articulation 100 de l'écran, de manière à être déplaçable à rotation autour d'un axe à peu près transversal à la tête de support d'outil de travail 4 entre sa position active et sa position escamotée, comme cela est représenté sur ces Fig. 13 et 14.

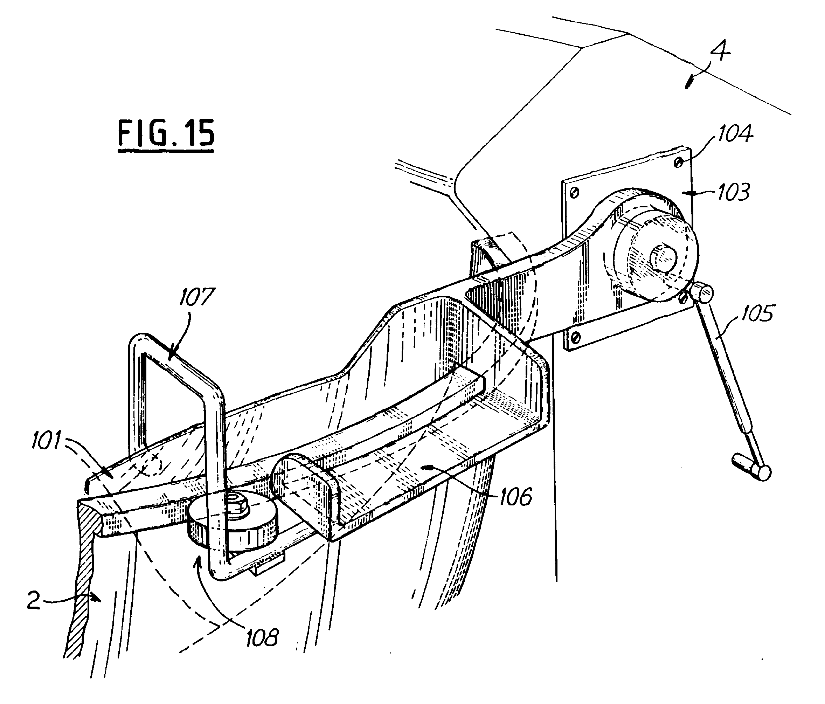

Comme on peut le voir plus clairement sur la Fig. 15, l'articulation de ce déflecteur 101 sur la tête de support de l'outil de travail 4, est assurée par l'intermédiaire d'une broche d'articulation coopérant avec le déflecteur et une embase de support 103 fixée sur la tête de support d'outil de travail 4, par exemple par l'intermédiaire de vis 104. Cette articulation comporte avantageusement des moyens de réglage de la position du déflecteur par rapport à la cuve, pour permettre par exemple la rapprochement du déflecteur de la surface intérieure de la cuve. Ces moyens de réglage sont constitués par exemple par les moyens de fixation 104 de l'embase sur la tête de support de l'outil de travail 4.

Les vis 104 permettent en effet de régler la position de l'embase et donc la position du déflecteur par rapport à la tête de support de l'outil de travail, afin de permettre le réglage de la position du déflecteur par rapport à la cuve.

Bien entendu, d'autres modes de réalisation des moyens d'articulation et des moyens de réglage sont possibles.

Par ailleurs, des moyens 105 constitués par exemple par un vérin pneumatique sont également prévus pour maintenir le déflecteur en position escamotée afin qu'il ne tombe pas.

Comme il est représenté également sur cette Fig. 15, le déflecteur et plus particulièrement la seconde portion de celui-ci comporte des moyens de guidage de pâte qui, en position active du déflecteur 101, s'étendent hors de la cuve sous le bord supérieur de celle-ci. Ces moyens de guidage comprennent par exemple une pièce en U 106 permettant d'assurer le guidage de la pâte après son passage au-dessus du bord supérieur de la cuve et donc son éjection de celle-ci.

Ces moyens de guidage permettent par exemple de diriger la pâte lors de son éjection vers d'autres moyens de travail de la pâte.

Le déflecteur comporte également une poignée de manoeuvre 107 permettant à l'utilisateur de déplacer facilement le déflecteur entre ses deux positions.

Par ailleurs, cette partie du déflecteur est également munie de moyens 108 de maintien du déflecteur en contact contre la surface intérieure de la cuve. Ces moyens sont constitués par exemple par un galet coopérant avec une surface de guidage comme une piste de roulement de la surface extérieure de la cuve ou un patin frottant sur celle-ci pour assurer un bon appui du déflecteur contre la surface intérieure de la cuve, et donc une bonne extraction de la pâte, ceci permettant par exemple de rattraper certains défauts de la cuve.

Bien entendu, d'autres modes de réalisation de ces moyens de guidage de la pâte et des moyens de maintien du déflecteur en contact contre la surface intérieure de la cuve peuvent être envisagés.

## Revendications

1. Pétrin pour matériau pateux, notamment pour pâte à pain, du type comportant une cuve (2) ayant une partie supérieure ouverte et des moyens de vidange de ladite cuve, caractérisé en ce que lesdits moyens de vidange comprennent au moins un déflecteur de pâte (6 ; 33 ; 101) dont une partie formant racloir s'étend, en position active, dans la cuve (2), adapté pour coopérer avec la paroi intérieure de la cuve afin de vidanger la cuve par déplacement relatif de la cuve, de la pâte et du déflecteur, en formant à partir de la masse de pâte contenue dans la cuve, un boudin de pâte, ledit déflecteur (6 ; 101) comprenant une première portion d'extrémité (8) adaptée pour prélever de la pâte dans le fond de la cuve (2), une portion intermédiaire (9) adaptée pour remonter la pâte prélevée vers la partie supérieure de la cuve, et une seconde portion d'extrémité (10) adaptée pour éjecter la pâte vers l'extérieur de la cuve.

2. Pétrin selon la revendication 1, caractérisé en ce que ladite première portion d'extrémité (8) du déflecteur comporte une lèvre (12) formant racloir, adaptée pour prélever de la pâte dans le fond de la cuve et la guider vers la portion intermédiaire (9) dudit déflecteur.

3. Pétrin selon la revendication 2, caractérisé en ce que ladite lèvre (12) formant racloir présente un premier bord (13) ayant une forme à peu près complémentaire à celle du fond de la cuve et un deuxième bord (14) adapté pour séparer au moins partiellement la pâte à prélever, du reste de celle-ci.

4. Pétrin selon la revendication 3, caractérisé en ce que la face avant de la lèvre (12) présente une concavité transversalement à la direction de déplacement de la pâte.

5. Pétrin selon la revendication 4, caractérisé en ce que ladite lèvre (12) comprend une première partie (15) s'étendant, en position active du déflecteur, à peu près à 45° par rapport au fond de la cuve, et une seconde partie (16) s'étendant au-dessus de la première, à peu près à 90° par rapport au fond de la cuve en position active du déflecteur.

6. Pétrin selon l'une quelconque des revendications 2 à 5 caractérisé en ce que ladite lèvre (12) s'étend en position active du déflecteur entre la partie centrale du fond de la cuve et la périphérie de celui-ci.

7. Pétrin selon l'une quelconque des revendications 2 à 6, caractérisé en ce que ladite lèvre (12) présente une section décroissante en direction de l'axe de la cuve.

8. Pétrin selon l'une quelconque des revendications précédentes, caractérisé en ce que ladite portion intermédiaire (9) dudit déflecteur se présente sous la forme d'une portion de canal de guidage de pâte, inclinée, en position active du déflecteur (6), par rapport à l'axe de la cuve (2) et adaptée pour coopérer avec le bord latéral de celle-ci pour constituer un canal de remontée de pâte s'étendant à partir de la première portion d'extrémité (8) du déflecteur entre le fond de la cuve et la partie supérieure de celle-ci.

9. Pétrin selon la revendication 8, caractérisé en ce que ledit canal de remontée de pâte présente une section décroissante en direction de la partie supérieure de la cuve (2).

10. Pétrin selon la revendication 8 ou 9, caractérisé en ce que la direction générale (R) du canal de remontée de la pâte fait avec une droite parallèle à l'axe de la cuve un angle $\alpha$ compris entre 30 et 55°.

11. Pétrin selon la revendication 10, caractérisé en ce que ledit angle est égal à 45°.

12. Pétrin selon l'une quelconque des revendications précédentes, caractérisé en ce que ladite portion intermédiaire (9) du déflecteur comprend une lèvre (17) formant racloir, de guidage et de remontée de la pâte, reliée de manière continue à ladite première portion d'extrémité (8) dudit déflecteur et comportant un bord (18) présentant une forme à peu près complémentaire à celle du bord latéral de la cuve (9) et une aile (19) de guidage de la pâte, ladite lèvre (17) formant avec le bord latéral de la cuve, un angle aigu, en position active du déflecteur, de manière à assurer, par déplacement relatif avec le bord de la cuve, un boudinage et la remontée de la pâte.

13. Pétrin selon la revendication 12, caractérisé en ce que la lèvre (17) et l'aile (19) de ladite portion intermédiaire (9) du déflecteur se présentent au moins partiellement, en section, sous la forme générale d'un V dont les extrémités des branches, en position active du déflecteur (6), sont en regard du bord latéral de la cuve, de manière à définir avec celui-ci ledit canal de remontée.

14. Pétrin selon la revendication 12 ou 13, caractérisé en ce que ladite aile (19) de la portion intermédiaire du déflecteur (6) comporte un bord effilé (20), relié au second bord (14) de la lèvre (12) de la première portion d'extrémité (8) dudit déflecteur, et adapté pour séparer la partie de pâte entrant dans la portion intermédiaire (9) du déflecteur, du reste de celle-ci.

15. Pétrin selon l'une quelconque des revendications 2 à 14, caractérisé en ce que la lèvre (12) de la première portion d'extrémité (8) du déflecteur est formée par une première portion de surface de la lame formant racloir, ladite surface s'étendant entre la partie centrale du fond de la cuve (2) et la périphérie de celui-ci.

16. Pétrin selon la revendication 15, caractérisé en ce que la lèvre (17) de la portion intermédiaire (9) du déflecteur est formée par une seconde portion de surface de la lame formant racloir, s'étendant à partir de la première portion de surface de celle-ci, le long du bord latéral de la cuve (2) entre le fond et la partie supérieure de celle-ci.

17. Pétrin selon la revendication 16, caractérisé en ce que lesdites première et seconde portions de surface de la lame formant racloir délimitent une surface de guidage et de remontée de pâte incurvée et continue.

18. Pétrin selon l'une quelconque des revendications 12 à 17, caractérisé en ce que le bord (18) de la portion intermédiaire (9) du déflecteur, de forme complémentaire à celle du bord latéral de la cuve, présente un rebord incliné (18a) de guidage de la pâte.

19. Pétrin selon l'une quelconque des revendications précédentes, caractérisé en ce que la seconde portion d'extrémité (10) du déflecteur comprend un déviateur de pâte (21), dont une extrémité est reliée à la portion intermédiaire (9) du déflecteur et dont l'autre extrémité débouche à l'extérieur de la cuve.

20. Pétrin selon la revendication 19, caractérisé en ce que ledit déviateur (21) comprend une portion présentant un canal de guidage incurvé (22) dont une extrémité est dans le prolongement du canal de guidage et de remontée de pâte et l'autre débouche vers l'extérieur de la cuve, ladite portion comportant un logement (23) de réception du rebord supérieur de la cuve.

21. Pétrin selon l'une quelconque des revendications précédentes, caractérisé en ce qu'une bande (24) de matériau de frottement est fixée sur les bords du déflecteur (6) en contact, en position active de celui-ci, avec la cuve (12).

22. Pétrin selon la revendication 21, caractérisé en ce que ledit matériau de frottement est constitué de matière plastique auto-lubrifiante.

23. Pétrin selon la revendication 21 ou 22 caractérisé en ce que ladite bande (24) est fixée de manière amovible sur les bords dudit déflecteur.

24. Pétrin selon les revendications 18 et 21, 22 ou 23 caractérisé en ce que ledit rebord incliné (18a) de guidage de pâte est constitué par un rebord incliné de ladite bande de matériau de frottement.

25. Pétrin selon l'une quelconque des revendications précédentes, dans lequel ladite cuve (2) est supportée par un bâti (1) et est entraînée en rotation par des moyens d'actionnement (3), une tête de support d'outil de travail (4) étant portée par ledit bâti (1), caractérisé en ce que ledit au moins un déflecteur (6) est fixé sur la tête de support de l'outil de travail (4) et est monté déplaçable entre ladite position active et une position escamotée.

26. Pétrin selon la revendication 25, caractérisé en ce que ladite seconde portion d'extrémité (10) du déflecteur est fixée sur la tête de support de l'outil de travail (4) et en ce que ladite première portion d'extrémité (8) et ladite portion intermédiaire (9) du déflecteur (6) sont montées déplaçables par rapport à cette seconde portion d'extrémité du déflecteur, entre la position active et la position escamotée.

27. Pétrin selon la revendication 26, caractérisé en ce que ladite première portion d'extrémité (8) et ladite portion intermédiaire (9) sont montées rotatives autour de leur axe de fixation (D-D) sur ladite seconde portion d'extrémité (10) du déflecteur par l'intermédiaire de moyens de commande.

28. Pétrin selon la revendication 27, caractérisé en ce qu'en position escamotée, les extrémités des branches du V constitué par la lèvre (17) et l'aile (19) de la portion intermédiaire du déflecteur sont en regard du fond de la cuve (2).

29. Pétrin selon l'une quelconque des revendications 26, 27 et 28, caractérisé en ce que ladite seconde portion d'extrémité (10) du déflecteur comprend un socle (25) de fixation du déflecteur (6) sur la tête de support de l'outil de travail (4), ledit socle (25) comprenant une première portion de surface (26) délimitant le canal incurvé d'éjection de pâte, s'étendant à partir de la portion intermédiaire de celui-ci, une seconde portion de surface (27) délimitant un plan d'articulation (B-B) de la portion intermédiaire (9) sur ce socle (25) du déflecteur, et une troisième portion de surface (28) délimitant un plan de fixation (A-A) du socle (25) sur la tête de support de l'outil de travail (4).

30. Pétrin selon la revendication 29, caractérisé en ce qu'en position active du déflecteur le plan de fixation (A-A) du socle (25) sur la tête de support de l'outil de travail (4) fait avec un plan passant par l'axe de la cuve un angle (β) d'à peu près 45°.

31. Pétrin selon la revendication 29 ou 30, caractérisé en ce que, en position active du déflecteur, le plan d'articulation (B-B) entre la portion intermédiaire (9) du déflecteur et le socle (25) est parallèle à un plan (C-C) passant par l'axe de la cuve.

32. Pétrin selon la revendication 29, 30 ou 31 caractérisé en ce que l'axe (D-D) de fixation de la portion intermédiaire (9) du déflecteur sur la seconde portion d'extrémité (10) de celui-ci est décalé angulairement vers le bord latéral correspondant de la cuve du pétrin, par rapport à un plan (E-E) perpendiculaire au plan (A-A) de fixation de la seconde portion d'extrémité (10) du déflecteur sur la tête de support de l'outil de travail (4).

33. Pétrin selon la revendication 32, caractérisé en ce que ledit axe est décalé d'à peu près 10°.

34. Pétrin selon l'une quelconque des revendications 1 à 24, dans lequel ladite cuve (2) est supportée par un bâti (1) et est entraînée en rotation par des moyens d'actionnement (3), une tête de support de l'outil de travail (4) étant portée par ledit bâti (1), caractérisé en ce que ledit déflecteur (33) est fixé sur ladite tête de support de l'outil et en ce qu'il comporte des moyens escamotables (30) de neutralisation de l'éjection, adaptés pour dévier la pâte vers l'intérieur de la cuve.

35. Pétrin selon la revendication 34, caractérisé en ce que lesdits moyens escamotables comprennent un volet (30) prévu dans une lèvre (31) d'une portion intermédiaire (32) du déflecteur (33) et déplaçable entre une position escamotée dans la lèvre et une position active de déviation de la pâte vers l'intérieur de la cuve à travers un évidement (34) du déflecteur.

36. Pétrin selon l'une quelconque des revendications 25 à 35, caractérisé en ce qu'un écran de sécurité (5) est articulé sur ladite tête de support de l'outil de travail (4), entre une position de fermeture de la partie supérieure de la cuve (2) et une position d'ouverture permettant d'avoir accès à l'intérieur de celle-ci, ledit écran de sécurité (5) comportant un dégagement (5a) pour le passage du déflecteur et l'accès à l'intérieur de la cuve.

37. Pétrin selon l'une quelconque des revendications 25 à 36, caractérisé en ce que la tête de support de l'outil de travail (4) est articulée sur le bâti (1) et déplaçable entre une position abaissée de travail et une position relevée.

38. Pétrin selon la revendication 25, caractérisé en ce que ledit au moins un déflecteur (101) est monté déplaçable en rotation autour d'un axe à peu près transversal de la tête (4) de support de l'outil de travail entre sa position active et sa position escamotée.

39. Pétrin selon la revendication 38, caractérisé en ce qu'il comporte des moyens de réglage de la position du déflecteur par rapport à la cuve.

40. Pétrin selon la revendication 39, caractérisé en ce que l'articulation (102) du déflecteur sur la tête est assurée par l'intermédiaire d'une broche d'articulation coopérant avec le déflecteur (101) et une embase de support (103) fixée sur la tête de support de l'outil de travail (4), le réglage de la position du déflecteur (101) par rapport à la cuve étant assuré par des moyens de fixation (104) de l'embase sur la tête (4).

41. Pétrin selon l'une quelconque des revendications précédentes, caractérisé en ce que la seconde portion du déflecteur comprend des moyens de guidage de pâte (106) qui, en position active du déflecteur s'étendent hors de la cuve sous le bord supérieur de celle-ci.

42. Pétrin selon la revendication 41, caractérisé en ce que les moyens de guidage comprennent une pièce en U (106).

43. Pétrin selon l'une quelconque des revendications précédentes, caractérisé en ce que le déflecteur (101) comprend une poignée de manoeuvre (107).

44. Pétrin selon l'une quelconque des revendications précédentes, caractérisé en ce qu'il comporte des moyens de maintien (108) du déflecteur en contact contre la surface intérieure de la cuve.

45. Pétrin selon la revendication 44, caractérisé en ce que les moyens de maintien comprennent un organe de guidage (108) du déflecteur coopérant avec une surface de guidage du bord extérieur de la cuve.

46. Pétrin selon la revendication 45, caractérisé en ce que l'organe de guidage comprend-un galet ou un patin de frottement (108) coopérant avec une piste de la surface extérieure de la cuve, pour plaquer le déflecteur contre la cuve.

## Claims

1. Kneader for dough-like material, in particular for bread dough, of the type comprising a vat (2) having an open upper part and means for emptying said vat, characterised in that said emptying means comprise at least one dough deflector (6 ; 33 ; 101) a part of which, forming a scraper, extends in the active position into the vat (2), and which is arranged to co-operate with the inner wall of the vat in order to empty the vat by a relative displacement of the vat, the dough and the deflector, by forming a roll of dough from the mass of dough contained in the vat, the said deflector (6 ; 101) comprising a first end portion (8) arranged to remove the dough in the bottom of the vat (2), an intermediate portion (9) arranged to raise the removed dough towards the upper part of the vat, and a second end portion (10) arranged to eject the dough towards the outside of the vat.

2. Kneader according to Claim 1, characterised in that the said first end portion (8) of the deflector comprises a lip (12) forming a scraper, arranged to remove the dough in the bottom of the vat and guide it towards the intermediate portion (9) of the said deflector.

3. Kneader according to Claim 2, characterised in that the said lip (12) forming a scraper has a first edge (13) having a shape approximately complementary to that of the bottom of the vat and a second edge (14) arranged to separate, at least partly, the dough which is to be removed, from the rest of the latter.

4. Kneader according to Claim 3, characterised in that the front face of the lip (12) has a concavity transversely to the direction of movement of the dough.

5. Kneader according to Claim 4, characterised in that the said lip (12) comprises a first part (15) extending, in the active position of the deflector, at approximately 45° relative to the bottom of the vat, and a second part (16) extending above the first, at approximately 90° relative to the bottom of the vat in the active position of the deflector.

6. Kneader according to any one of Claims 2 to 5, characterised in that the said lip (12) extends in the active position of the deflector between the centre part of the bottom of the vat and the periphery of the bottom.

7. Kneader according to any one of Claims 2 to 6, characterised in that the said lip (12) has a section which decreases in the direction of the axis of the vat.

8. Kneader according to any one of the preceding Claims, characterised in that the said intermediate portion (9) of the said deflector is in the shape of a portion of a dough guiding channel which is inclined, in the active position of the deflector (6), relative to the axis of the vat (2) and arranged to co-operate with the lateral edge of the latter so as to form a dough-raising channel extending from the first end portion (8) of the deflector between the bottom of the vat and the upper part of the latter.

9. Kneader according to Claim 8, characterised in that the said dough-raising channel has a section which decreases in the direction of the upper part of the vat (2).

10. Kneader according to Claim 8 or 9, characterised in that the general direction (R) of the dough-raising channel forms with a straight line parallel to the axis of the vat an angle $\alpha$ of between 30 and 55°.

11. Kneader according to Claim 10, characterised in that the said angle is equal to 45°.

12. Kneader according to any one of the preceding Claims, characterised in that the said intermediate portion (9) of the deflector comprises a lip (17) forming a scraper for guiding and raising the dough, connected in a continuous manner to the said first end portion (8) of said deflector and comprising an edge (18) having a shape which is approximately complementary to that of the lateral edge of the vat (9) and a dough-guiding wing, the said lip (19) forming with the lateral edge of the vat an acute angle, in the active position of the deflector, in such a way, by relative displacement with the edge of the vat, as to mould the dough into a roll and raise it.

13. Kneader according to Claim 12, characterised in that the lip (17) and the wing (19) of the said intermediate portion (9) of the deflector are at least partly, in section, in the general shape of a V, the ends of the limbs of which, in the active position of the deflector (6), face the lateral edge of the vat so as to define with the edge the said raising channel.

14. Kneader according to Claim 12 or 13, characterised in that the said wing (19) of the intermediate portion of the deflector (6) comprises a tapered edge (20) connected to the second edge (14) of the lip (12) of the first end portion (8) of the said deflector, and arranged to separate the part of the dough entering the intermediate portion (9) of the deflector from the rest of the dough.

15. Kneader according to any one of Claims 2 to 14, characterised in that the lip (12) of the first end portion (8) of the deflector is formed by a first surface portion of the blade forming a scraper, the said surface extending between the central part of the bottom of the vat (2) and the periphery of the bottom.

16. Kneader according to Claim 15, characterised in that the lip (17) of the intermediate portion (9) of the deflector is formed by a second surface portion of the blade forming a scraper, extending from the first surface portion of the blade along the lateral edge of the vat (2) between the bottom and the upper part of the vat.

17. Kneader according to Claim 16, characterised in that the said first and second surface portions of the blade forming a scraper define a curved and continuous surface for guiding and raising the dough.

18. Kneader according to any one of Claims 12 to 17, characterised in that the edge (18) of the intermediate portion (9) of the deflector, which has a shape complementary to that of the lateral edge of the vat, has an inclined dough-guiding flange (18a).

19. Kneader according to any one of the preceding Claims, characterised in that the second end portion (10) of the deflector comprises a dough deviator (21), one end of which is connected to the intermediate portion (9) of the deflector, and the other end of which emerges on the outside of the vat.

20. Kneader according to Claim 19, characterised in that the said deviator (21) comprises a portion having a curved guiding channel (22), one end of which is in extension of the channel for guiding and raising the dough, and the other emerges towards the outside of the vat, the said portion comprising a recess (23) for receiving the upper flange of the vat.

21. Kneader according to any one of the preceding Claims, characterised in that a strip (24) of rubbing material is fixed to the edges of the deflector (6) in contact with the vat (12) in the active position of the deflector.

22. Kneader according to Claim 21, characterised in that the said rubbing material consists of a self-lubricating plastics material.

23. Kneader according to Claim 21 or 22, characterised in that the said strip (24) is detachably fixed to the edges of the said deflector.

24. Kneader according to Claims 18 and 21, 22 or 23, characterised in that the said inclined dough-guiding flange (18a) consists of an inclined flange of the said strip of rubbing material.

25. Kneader according to any one of the preceding Claims, wherein the said vat (2) is supported by a frame (1) and is driven in rotation by actuating means (3), a working tool support head (4) being carried by the said frame (1), characterised in that the said deflector (6), of which there is at least one, is fixed to the working tool support head (4) and is mounted so as to be movable between the said active position and a retracted position.

26. Kneader according to Claim 25, characterised in that the said second end portion (10) of the deflector is fixed onto the working tool support head (4) and that the said first end portion (8) and the said intermediate portion (9) of the deflector (6) are mounted so as to be movable relative to the second end portion of the deflector between the active position and the retracted position.

27. Kneader according to Claim 26, characterised in that the said first end portion (8) and the said intermediate portion (9) are mounted so as to be rotatable about their fixing axis (D-D) on the said second end portion (10) of the deflector by way of control means.

28. Kneader according to Claim 27, characterised in that in the retracted position the ends of the limbs of the V formed by the lip (17) and the wing (19) of the intermediate portion of the deflector face the bottom of the vat (2).

29. Kneader according to any one of Claims 26, 27 and 28, characterised in that the said second end portion (10) of the deflector comprises a base (25) for fixing the deflector (6) onto the working tool support head (4), the said base (25) comprising a first surface portion (26) defining the curved dough-ejecting channel extending from the intermediate portion of the channel, a second surface portion (27) defining a pivot plane (B-B) between the intermediate portion (9) and the base (25) of the deflector, and a third surface portion (28) defining a fixing plane (A-A) for the base (25) on the working tool support head (4).

30. Kneader according to Claim 29, characterised in that in the active position of the deflector the fixing plane (A-A) of the base (25) on the working tool support head (4) forms with a plane passing through the axis of the vat an angle ($\beta$) of approximately 45°.

31. Kneader according to Claim 29 or 30, characterised in that, in the active position of the deflector, the pivot plane (B-B) between the intermediate portion (9) of the deflector and the base (25) is parallel to a plane (C-C) passing through the axis of the vat.

32. Kneader according to Claim 29, 30 or 31, characterised in that the fixing axis (D-D) of the intermediate portion (9) of the deflector on the second end portion (10) of the latter is angularly offset towards the corresponding lateral edge of the vat of the kneader, relative to a plane (E-E) perpendicular to the fixing plane (A-A) of the second end portion (10) of the deflector on the working tool support head (4).

33. Kneader according to Claim 32, characterised in that the said axis is offset by approximately 10°.

34. Kneader according to any one of Claims 1 to 24, wherein the said vat (2) is supported by a frame (1) and is driven in rotation by actuating means (3), a working tool support head (4) being carried by the said frame (1), characterised in that the said deflector (33) is fixed onto the said tool support head and that it comprises retractable means (30) for countering the ejection, arranged to deviate the dough towards the inside of the vat.

35. Kneader according to Claim 34, characterised in that the said retractable means comprise a flap (30) provided in a lip (31) of an intermediate portion (32) of the deflector (33) and movable between a retracted position in the lip and an active position for deviating the dough towards the inside of the vat through an opening (34) in the deflector.

36. Kneader according to any one of Claims 25 to 35, characterised in that a safety screen (5) is mounted on the said working tool support head (4) so as to pivot between a position for closing the upper part of the vat (2) and an opening position permitting access to the inside of the latter, the said safety screen (5) comprising a recess (5a) for the passage of the deflector and the access to the inside of the vat.

37. Kneader according to any one of Claims 25 to 36, characterised in that the working tool support head (4) is arranged to pivot on the frame (1) and is movable between a lowered working position and a raised position.

38. Kneader according to Claim 25, characterised in that the said deflector (101), of which there is at least one, is mounted so as to be movable in rotation about an axis approximately transversely to the working tool support head (4) between its active position and its retracted position.

39. Kneader according to Claim 38, characterised in that it comprises means for adjusting the position of the deflector relative to the vat.

40. Kneader according to Claim 39, characterised in that the pivoting (102) of the deflector on the head is effected by way of a pivot pin co-operating with the deflector (101) and a support base (103) fixed onto the working tool support head (4), the adjustment of the position of the deflector (101) relative to the vat being effected by means (104) for fixing the base onto the head (4).

41. Kneader according to any one of the preceding Claims, characterised in that the second portion of the deflector comprises dough-guiding means (106) which, in the active position of the deflector, extend outside the vat below the upper edge of the latter.

42. Kneader according to Claim 41, characterised in that the guiding means comprise a U-shaped member (106).

43. Kneader according to any one of the preceding Claims, characterised in that the deflector (101) comprises a shifting handle (107).

44. Kneader according to any one of the preceding Claims, characterised in that it comprises means (108) for holding the deflector in contact against the inner surface of the vat.

45. Kneader according to Claim 44, characterised in that the holding means comprise an element (108) for guiding the deflector, co-operating with a guide surface on the outer edge of the vat.

46. Kneader according to Claim 45, characterised in that the guide element comprises a roller or a rubbing shoe (108) co-operating with a track on the outer surface of the vat in order to apply the deflector against the vat.

**Patentansprüche**

1. Knetmaschine für teigartiges Material, insbesondere für Brotteig, einer Art mit einer Wanne (2), welche einen offenen oberen Teil aufweist, und Mitteln zum Entleeren der Wanne, dadurch gekennzeichnet, daß die Entleerungsmittel wenigstens einen Teigablenker (6 ; 33 ; 101) aufweisen, bei welchem ein einen Abstreifer bildender Teil sich in aktiver Position in der Wanne (2) erstreckt und für ein Zusammenwirken mit der Innenwand der Wanne zum Entleeren der Wanne durch Relativversetzung der Wanne, des Teiges und des Ablenkers unter Ausbildung, ausgehend von der kontinuierlichen Teigmasse in der Wanne, eines Teigballens eingerichtet ist, wobei der Ablenker (6 ; 101) einen ersten Endabschnitt (8), der für ein Entnehmen des Teiges im Boden der Wanne (2) eingerichtet ist, einen Mittelabschnitt (9), der für ein Anheben des entnommenen Teiges zum oberen Teil der Wanne eingerichtet ist, und einen zweiten Endabschnitt (10), der für ein Auswerfen des Teiges aus der Wanne eingerichtet ist, aufweist.

2. Knetmaschine nach Anspruch 1, dadurch gekennzeichnet, daß der erste Endabschnitt (8) des Ablenkers eine einen Abstreifer bildende Lippe (12) aufweist, welche für ein Entnehmen des Teiges im Boden der Wanne und ein Führen desselben zum Mittelabschnitt (9) des Ablenkers eingerichtet ist.

3. Knetmaschine nach Anspruch 2, dadurch gekennzeichnet, daß die einen Abstreifer bildende Lippe (12) einen ersten Rand (13) mit einer zu derjenigen des Bodens der Wanne im wesentlichen komplementären Form und einen zweiten Rand (14), welcher für ein wenigstens teilweise Separieren des zu entnehmenden Teiges vom Rest desselben eingerichtet ist, aufweist.

4. Knetmaschine nach Anspruch 1, dadurch gekennzeichnet, daß die Vorderseite der Lippe (12) eine konkavität quer zur Versetzungsrichtung des Teiges aufweist.

5. Knetmaschine nach Anspruch 4, dadurch gekennzeichnet, daß die Lippe (12) einen ersten Abschnitt (15), welcher sich in aktiver Stellung des Ablenkers unter ungefähr 45° in Bezug auf den Boden der Wanne erstreckt, und einen zweiten Abschnitt (16), welcher sich in aktiver Stellung des Ablenkers über dem ersten unter ungefähr 90° in Bezug auf den Boden der Wanne erstreckt, aufweist.

6. Knetmaschine nach irgendeinem der Ansprüche 2 bis 5, dadurch gekennzeichnet, daß sich die Lippe (12) in aktiver Stellung des Ablenkers zwischen dem Mittelteil des Bodens der Wanne und dem Rand desselben erstreckt.

7. Knetmaschine nach irgendeinem der Ansprüche 2 bis 6, dadurch gekennzeichnet, daß die Lippe (12) einen in Richtung der Wannenachse abnehmenden Querschnitt aufweist.

8. Knetmaschine nach irgendeinem der vorstehenden Ansprüche, dadurch gekennzeichnet, daß der Mittelabschnitt (9) des Ablenkers sich in Form eines Führungskanalabschnitts für den Teig darstellt, der in aktiver Stellung des Ablenkers (6) bezüglich der Achse der Wanne (2) geneigt ist und für ein Zusammenwirken mit dem seitlichen Rand derselben einen Teiganhebekanal bildend zusammenwirkt, welcher sich vom ersten Endabschnitt (8) des Ablenkers zwischen dem Boden der Wanne und dem oberen Teil derselben erstreckt.

9. Knetmaschine nach Anspruch 8, dadurch gekennzeichnet, daß der Teiganhebekanal einen in Richtung des oberen Teils der Wanne (2) abnehmenden Querschnitt aufweist.

10. Knetmaschine nach Anspruch 8 oder 9, dadurch gekennzeichnet, daß die allgemeine Richtung (R) des Teiganhebekanals mit einer zur Achse der Wanne parallelen Geraden einen Winkel α zwischen 30 und 55° einschließt.

11. Knetmaschine nach Anspruch 10, dadurch gekennzeichnet, daß der Winkel gleich 45° ist.

12. Knetmaschine nach irgendeinem der vorstehenden Ansprüche, dadurch gekennzeichnet, daß der Mittelteil (9) des Ablenkers eine Abstreifer-, Führungs- und Teiganheberlippe (17) aufweist, die kontinuierlich an den ersten Endabschnitt (8) des Ablenkers anschließt und einen Rand (18) mit einer zu derjenigen des seitlichen Randes der Wanne (2) komplementären Form und einen Führungsflügel (19) für den Teig umfaßt, wobei die Lippe (17) mit dem seitlichen Rand der Wanne in aktiver Stellung des Ablenkers einen spitzen Winkel bildet, derart, daß durch Relativversetzung mit dem Rand der Wanne eine Extrudierung und das Anheben des Teigs gewährleistet ist.

13. Knetmaschine nach Anspruch 12, dadurch gekennzeichnet, daß die Lippe (17) und der Flügel (19) des Mittelteils (9) des Ablenkers sich wenigstens teilweise im Querschnitt in Form eines allgemeinen V darstellen, dessen Schenkelenden in aktiver Stellung des Ablenkers (6) dem seitlichen Rand der Wanne gegenüberliegen, derart, daß mit diesem der Anhebekanal gebildet wird.

14. Knetmaschine nach Anspruch 12 oder 13, dadurch gekennzeichnet, daß der Flügel (19) des Mittelteils des Ablenkers (6) einen sich verjüngenden Rand (20) aufweist, der mit dem zweiten Rand (14) der Lippe (12) des ersten Endabschnitts (8) des Ablenkers verbunden und für ein Separieren des in den Mittelteil (9) des Ablenkers eintretenden Teil des Teiges vom Rest desselben eingerichtet ist.

15. Knetmaschine nach irgendeinem der Ansprüche 2 bis 14, dadurch gekennzeichnet, daß die Lippe (12) des ersten Endabschnitts (8) des Ablenkers durch einen ersten oberen Oberflächenabschnitt der den Abstreifer bildenden Klinge gebildet ist, wobei sich die Oberfläche zwischen dem Mittelteil des Bodens der Wanne (2) und dem Rand desselben erstreckt.

16. Knetmaschine nach Anspruch 15, dadurch gekennzeichnet, daß die Lippe (17) des Mittelteils (9) des Ablenkers durch einen zweiten Oberflächenabschnitt der den Abstreifer bildenden Klinge gebildet ist, der sich ausgehend vom ersten Abschnitt der Oberfläche desselben längs des seitlichen Randes der Wanne (2) zwischend dem Boden und dem oberen Teil derselben erstreckt.

17. Knetmaschine nach Anspruch 16, dadurch gekennzeichnet, daß der erste und zweite Oberflächenabschnitt der den Abstreifer bildenden Klinge eine gekrümmte und kontinuierliche Führungs- und Anhebefläche für den Teig bestimmen.

18. Knetmaschine nach irgendeinem der Ansprüche 12 bis 17, dadurch gekennzeichnet, daß der Rand (18) des Mittelteils (9) des Ablenkers, mit zu derjenigen des seitlichen Rands der Wanne komplementärer Form, einen geneigten umgelegten Führungsrand (18a) für den Teig aufweist.

19. Knetmaschine nach irgendeinem der vorstehenden Ansprüche, dadurch gekennzeichnet, daß der zweite Endabschnitt (10) des Ablenkers einen Teigabweiser (21) aufweist, dessen eines Ende mit dem Mittelteil (9) des Ablenkers verbunden ist und dessen anderes Ende außerhalb der Wanne mündet.

20. Knetmaschine nach Anspruch 19, dadurch gekennzeichnet, daß der Abweiser (21) einen Abschnitt aufweist, der einen gekrümmten Führungskanal (22) darstellt, dessen eines Ende in der Verlängerung des Führungs- und Anhebekanals für den Teig liegt und dessen anderes Ende außerhalb der Wanne mündet, wobei der Abschnitt einen Sitz (23) zur Aufnahme des oberen Randes der Wanne aufweist.

21. Knetmaschine nach irgendeinem der vorstehenden Ansprüche, dadurch gekennzeichnet, daß ein Band (24) aus Reibwerkstoff auf den Rändern des Ablenkers (6) befestigt ist, welche in aktiver Stellung desselben mit der Wanne (2) in Berührung sind.

22. Knetmaschine nach Anspruch 21, dadurch gekennzeichnet, daß der Reibwerkstoff durch selbstschmierenden Kunststoff gebildet ist.

23. Knetmaschine nach Anspruch 21 oder 22, dadurch gekennzeichnet, daß das Band (24) lösbar an den Rändern des Ablenkers befestigt ist.

24. Knetmaschine nach den Ansprüchen 18 und 21, 22 oder 23, dadurch gekennzeichnet, daß der geneigte umgelegte Führungsrand (18a) für den Teig durch einen geneigten umgelegten Rand des Bandes aus Reibwerkstoff gebildet ist.

25. Knetmaschine nach irgendeinem der vorstehenden Ansprüche, bei welcher die Wanne (2) von einem Gestell (1) gehalten ist und durch Betätigungsmittel (3) drehend angetrieben wird, wobei ein Arbeitswerkzeugträgerkopf (4) auf dem Gestell (1) sitzt, dadurch gekennzeichnet, daß der wenigstens eine Abstreifer (6) an dem Arbeitswerkzeugträgerkopf (4) befestigt und zwischen der aktiven Stellung und einer zurückgezogenen Stellung versetzbar angebracht ist.

26. Knetmaschine nach Anspruch 25, dadurch gekennzeichnet, daß der zweite Endabschnitt (10) des Ablenkers am Arbeitswerkzeugträgerkopf (4) befestigt ist und daß der erste Endabschnitt (8) und der Mittelabschnitt (9) des Ablenkers (6) in Bezug auf diesen zweiten Endabschnitt des Ablenkers zwischen der aktiven Stellung und einer zurückgezogenen Stellung versetzbar angebracht sind.

27. Knetmaschine nach Anspruch 26, dadurch gekennzeichnet, daß der erste Endabschnitt (8) und der Mittelabschnitt (9) um ihre Befestigungsachse (D-D) am zweiten Endabschnitt (10) des Ablenkers mittels Steuermitteln drehbar angebracht sind.

28. Knetmaschine nach Anspruch 27, dadurch gekennzeichnet, daß in zurückgezogener Stellung die Enden der Schenkel der durch das V gebildeten Lippe (17) und der Flügel (19) des Mittelabschnitts des Ablenkers dem Boden der Wanne (2) gegenüberliegen.

29. Knetmaschine nach irgendeinem der Ansprüche 26, 27 und 28, dadurch gekennzeichnet, daß der zweite Endabschnitt (10) des Ablenkers einen Befestigungssockel (25) zum Befestigen des Ablenkers (6) am Arbeitswerkzeugträgerkopf (4) aufweist, wobei der Sockel (25) einen ersten Oberflächenabschnitt (26), welcher den gekrümmten Ausstoßkanal für den Teig begrenzt und sich vom Mittelteil desselben erstreckt, einen zweiten Oberflächenabschnitt (27), welcher eine Schwenkebene (B-B) des Mittelteils (9) auf dem Sockel (25) des Ablenkers bestimmt und einen dritten Oberflächenabschnitt (28), welcher eine Befestigungsebene (A-A) des Sockels (25) auf dem Arbeitswerkzeugträgerkopf (4) bestimmt, aufweist.

30. Knetmaschine nach Anspruch 29, dadurch gekennzeichnet, daß in aktiver Stellung des Ablenkers die Befestigungsebene (AA) des Sockels (25) am Arbeitswerkzeugträgerkopf (4) mit einer Ebene, die durch die Achse der Wanne geht, einen Winkel (β) von ungefähr 45° einschließt.

31. Knetmaschine nach Anspruch 29 oder 30, dadurch gekennzeichnet, daß in aktiver Stellung des Ablenkers die Schwenkebene (B-B) zwischen dem Mittelteil (9) des Ablenkers und dem Sockel (25) parallel zu einer durch die Achse der Wanne gehenden Ebene (C-C) ist.

32. Knetmaschine nach Anspruch 29, 30 oder 31, dadurch gekennzeichnet, daß die Befestigungsachse (D-D) des Mittelteils (9) des Ablenkers am zweiten Endabschnitt (10) desselben zum entsprechenden seitlichen Rand der Wanne der Knetmaschine bezüglich einer zur Befestigungsebene (A-A) des zweiten Endabschnitts (10) des Ablenkers am Arbeitswerkzeugträgerkopf (4) senkrechten Ebene (E-E) winkelmäßig versetzt ist.

33. Knetmaschine nach Anspruch 32, dadurch gekennzeichnet, daß die Achse um ungefähr 10° versetzt ist.

34. Knetmaschine nach irgendeinem der Ansprüche 1 bis 24, bei welcher die Wanne (2) von einem Gestell (1) gehalten ist und durch Betätigungsmittel (3) drehend angetrieben wird, wobei ein Arbeitswerkzeugträgerkopf (4) auf dem Gestell (1) sitzt, dadurch gekennzeichnet, daß der Ablenker (33) auf dem Werkzeugträgerkopf befestigt ist und daß er einziehbare Mittel (30) zum Neutralisieren des Ausstoßens aufweist, die für ein Umleiten des Teiges zum Inneren der Wanne hin eingerichtet sind.

35. Knetmaschine nach Anspruch 34, dadurch gekennzeichnet, daß die einziehbaren Mittel eine Klappe (30) umfassen, die in einer Lippe (31) eines Mittelabschnitts (32) des Ablenkers (33) vorgesehen und zwischen einer in der Lippe eingezogenen Stellung und einer aktiven Umleitstellung zum Umleiten des Teigs zum Inneren der Wanne durch eine Ausnehmung (34) des Ablenkers hindurch versetzbar ist.

36. Knetmaschine nach irgendeinem der Ansprüche 25 bis 35, dadurch gekennzeichnet, daß ein Sicherheitsschirm (5) am Arbeitswerkzeugträgerkopf (4) zwischen einer Stellung, in der der obere Teil der Wanne (2) abgeschlossen ist und einer offenen Stellung, in der Zugang zum Inneren derselben möglich ist, schwenkbar angebracht ist, wobei der Sicherheitsschirm (5) eine Ausnehmung (5a) für den Durchtritt des Ablenkers und den Zugang zum Inneren der Wanne aufweist.

37. Knetmaschine nach irgendeinem der Ansprüche 25 bis 36, dadurch gekennzeichnet, daß der Arbeitswerkzeugträgerkopf (4) am Gestell (1) angelenkt und zwischen einer abgesenkten Arbeitsstellung und einer angehobenen Stellung versetzbar ist.

38. Knetmaschine nach Anspruch 25, dadurch gekennzeichnet, daß der wenigstens eine Ablenker (101) um eine zum Arbeitswerkzeugträgerkopf (4) etwa senkrechte Achse zwischen seiner aktiven und seiner zurückgezogenen Stellung verdrehbar ist.

39. Knetmaschine nach Anspruch 38, dadurch gekennzeichnet, daß sie Mittel zum Einstellen der Stellung des Ablenkers bezuglich der Wanne aufweist.

40. Knetmaschine nach Anspruch 39, dadurch gekennzeichnet, daß die Anlenkung (102) des Ablenkers am Kopf über eine mit dem Ablenker (101) zusammenwirkende Schwenkwelle und eine am Arbeitswerkzeugträgerkopf (4) befestigte Fußplatte (103) gewährleistet ist, wobei die Einstellung der Position des Ablenkers (101) bezuglich der Wanne durch Mittel (104) zur Befestigung der Fußplatte am Kopf (4) gewährleistet ist.

41. Knetmaschine nach irgendeinem der vorstehenden Anspruche, dadurch gekennzeichnet, daß der zweite Abschnitt des Ablenkers Mittel (106) zum Fuhren des Teiges aufweist, die in aktiver Stellung des Ablenkers sich außerhalb der Wanne unter dem oberen Rand derselben erstrecken.

42. Knetmaschine nach Anspruch 41, dadurch gekennzeichnet, daß die Führungsmittel ein U-förmiges Teil (106) umfassen.

43. Knetmaschine nach irgendeinem der vorstehenden Ansprüche, dadurch gekennzeichnet, daß der Ablenker (101) einen Bedienungsgriff (107) aufweist.

44. Knetmaschine nach irgendeinem der vorstehenden Ansprüche, dadurch gekennzeichnet, daß sie Mittel (108) zum Halten des Ablenkers in Berührung mit der Innenfläche der Wanne aufweist.

45. Knetmaschine nach Anspruch 44, dadurch gekennzeichnet, daß die Mittel zum Halten ein mit einer Führungsfläche des äußeren Rands der Wanne zusammenwirkendes Führungselement (108) für den Ablenker aufweisen.

46. Knetmaschine nach Anspruch 45, dadurch gekennzeichnet, daß das Führungselement eine Rolle oder eine Schleifkufe (108), die mit einer Spur der Außenfläche der Wanne für ein Anlegen des Ablenkers an die Wanne zusammenwirken, aufweist.

FIG.1

FIG.2

# FIG.3

FIG. 4

FIG.7

FIG.5

FIG.6

FIG.8

## FIG.9

# FIG.10

# FIG.11

# FIG.12

EP 0 300 871 B1

# FIG.13

# FIG.14

FIG. 15

EP 0 300 871 B1